# EUROPEAN PATENT APPLICATION

(11) **EP 1 021 940 A1**
(43) Date of publication of application: **26.07.2000**
(21) Application number: 99309436.6
(22) Date of filing: 25.11.1999
(51) Int. Cl.: A01B 15/14

(54) **Linkage**

(30) Priority: 20.01.1999 GB 9901110
(71) Applicant: Landforce Limited, Lincolnshire NG31 6JE (GB)
(72) Inventor: Andrews, Mark Adrian, Grantham, Lincolnshire NG31 6JE (GB)
(74) Representative: Sherrard-Smith, Hugh

(57) **Abstract**

A headstock 18, side links 20 and 24 and a rear link 26 are connected together by pivot axes such that they form a quadrilateral linkage. The junction of the links 22 and 24 is connected to the plough beam 22 via a turn buckle 28. To alter the furrow line of each furrow sideways with respect to the centre line of a tractor a hydraulic cylinder 30 extending between opposed pivots of the linkage is actuated to alter the angle of the linkage. The angle of the beam remains the same with respect to the direction of travel as the plough forces on the landsides part of the soil engaging parts is such that the landsides force the power beam to remain at the same angle. Consequently the distance between the furrows ploughed remains the same.

## Description

The present invention relates to a towing linkage, a linkage when connected to an article to be towed, a linkage when connected to a vehicle that tows the linkage and a method of adjusting a towing linkage. The invention is particularly, although not exclusively, applicable to a linkage of a plough for towing by a tractor.

According to one aspect of the present invention a towing linkage of at least four sides includes a forward link that, in use, is arranged to be connected to a towing vehicle and a rearward link, spaced from the forward link, that is arranged, in use, to be connected to an article to be towed, the linkage including adjustment means whereby the relative angle of the forward link to the rearward link can be altered.

Actuation of the adjustment means may be arranged, in use, to cause a sideways shift of an article being towed. That actuation may also be arranged to cause an angular shift of the forward link. Upon actuation of the adjustment means the angle of the rearward link, in use, may be arranged to remain constant with respect to the direction of motion of a towing vehicle.

The adjustment means may extend from one link to a link spaced from that link. The adjustment means may extend from the junction where two links meet and may extend to a portion of another link spaced from the connection of another link to adjacent links.

The adjustment means may be hydraulic.

The effective length of the forward link may be different from the effective length of the rearward link. Alternatively or additionally the length of the link at one side may be different from a length at the other side. The difference in length of the links may be adjustable between a plurality of different effective lengths. The difference in lengths may be greater than 2% or in the region of 4% or less than 30% or in the region of 20% or, alternatively or additionally, may be adjustable from the region of 4% to the region of 20% Links having different effective lengths may be interchangeable or adjustable.

At least one, and preferably at least some, and preferably all of the links are connected to adjacent links by a pivotal connection.

The linkage may be arranged to be connected at two spaced locations to a vehicle in order to tow the linkage. The linkage may be arranged to be connected to two arms that project rearwardly from a vehicle. The arms may project rearwardly and outwardly from each other with respect to the vehicle. The arms may be arranged to be connected at opposed side regions of the forward links. The arms may be pivotally connected at the connection to the linkage and may be pivotally connected at the connection to a vehicle for instance at spaced locations.

The arms from the vehicle, when projected forward, may coincide at a point forward of the arms. That point may be arranged to move in an opposite sideways direction to the centre line of a vehicle to the direction that the rearward link moves in a sideways direction on actuation of the adjustment means.

The linkage may be part of an article, such as a plough. The plough beam may be fixed in relation to the rear links such that angular or transverse movement of the rear link causes corresponding movement of the plough beam. There may be adjustment means to alter the relative angle of the plough beam to the rear link.

The present invention includes a linkage as herein referred to when attached to an article such as a plough to be towed and could also include a linkage when herein referred to when connected to a towing vehicle such as a tractor.

According to a further aspect of the present invention a method of adjusting a towing linkage comprises moving a forward link relative to a rearward link whereby the relative angle of the forward link to the rearward link is altered.

The method may comprise causing a sideways shift of the rear link and, alternatively or additionally, causing a sideways shift of the forward link.

The method may comprise causing the angle of the rearward link to remain constant with respect to the direction of intended towing after altering the relative angle of the forward and rearward links. The method may comprise causing the rearward link to move in a greater sideways direction than the forward link after adjustment.

The method may comprise altering the effective length of at least one link and, alternatively or additionally, interchanging links of different lengths.

The method may comprise, when the linkage is connected to a vehicle, causing the rear link to move in one sideways direction with respect to the intended direction of travel and causing an effective towing point comprised by causing the coincidence of a projection forward of two spaced arms that tow the linkage to move in the opposite sideways direction with respect to the intended direction of travel.

The method may comprise causing the force exerted by the towing to pass through the region of the tractive force of the vehicle after the linkage has been adjusted from one position to another position.

The present invention can be carried into practice in various ways but one embodiment will now be described, by way of example and with reference to the accompanying drawings in which:
Figure 1 is a schematic plan view of a tractor 10 and plough 12;
Figures 2 is a schematic plan view of the plough 12;
Figure 3 is a diagram showing a plough and tractor in a configuration in which the forces are not matched;
Figure 4 is a view similar to Figure 3;
Figure 5 is a view similar to Figure 4;
Figure 6 is a view showing the forces in a balanced configuration, and
Figure 7 is a schematic diagram of a linkage 40 according to the present invention;
Figures 8 and 9 are examples of a first embodiment of the linkage in different positions and
Figures 10 and 11 are examples of a further embodiment of a linkage in alternate shift positions;
Figures 12 and 13 are schematic drawings showing the forces involved with the embodiment shown in the respective positions of Figures 8 and 9, and
Figures 14 and 15 are schematic embodiments showing the forces involved with the embodiment shown in the positions of Figures 10 and 11 respectively.

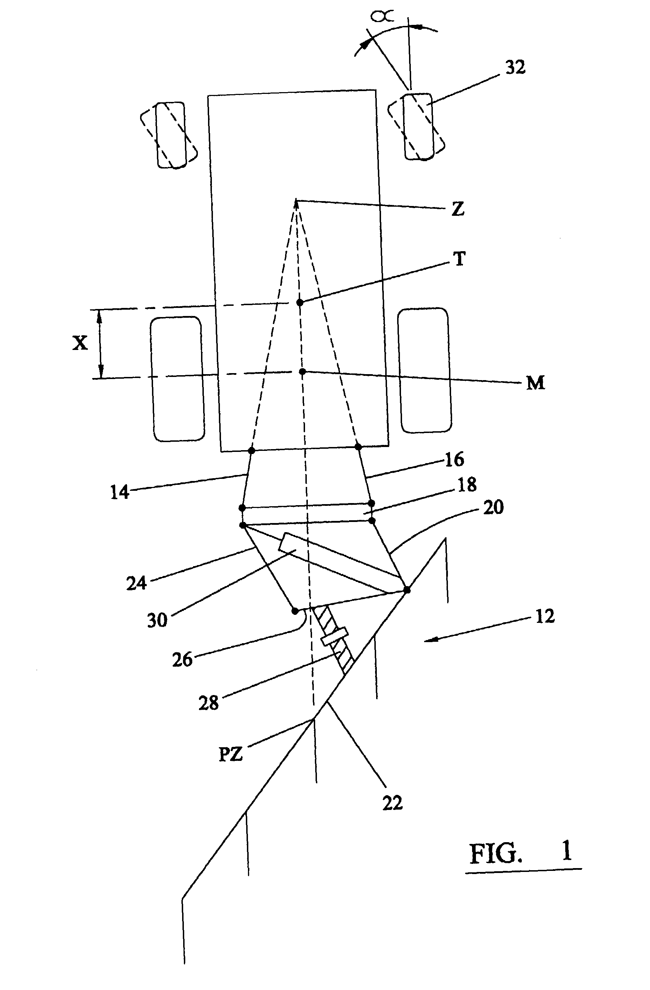

Figure 1 is a schematic plan view of a tractor 10 and a tractor linkage 12. The tractor 10 includes two links 14 and 16 that are pivotally connected at one end to fixed points on the tractor and, at the other end, they are pivotally connected to a headstock 18. The links 14 and 16 diverge outwardly from the tractor towards the headstock. The headstock 18 is connected at one end via a side link 20 to a plough beam 22 and at the other via a side link 24 and a rear link 26 to the plough beam 22.

The headstock 18, side links 20 and 24 and the rear link 26 are connected together by pivot axes such that these parts form a quadrilateral. The junction of the links 22 and 24 is connected to the plough beam 22 via a turn buckle 28.

When it is desired to alter the furrow line of each furrow sideways with respect to the centre line of the tractor, a hydraulic cylinder 30 extending between opposed pivots of the linkage is actuated to alter the angle of the linkage. The angle of the beam remains the same with respect to the direction of travel as the plough forces on the landsides part of the soil engaging parts is such that the landsides force the plough beam to remain at the same angle. Consequently the distance between the furrows ploughed remains the same.

If the linkage were a parallelogram then the angle of the front link or headstock would be required to remain the same as it was before. Consequently unacceptable forces would be placed on the tractor links 14 and 16 as these would not be able to move from the position shown. In this respect, any pivoting of the links would attempt to alter the angle of the headstock which would not be permitted because of the overriding force of the plough shares that maintain the beam at one angle. Thus either the linkage or another part of the assembly would fail or the effective pulling point of the plough beam would be moved off the centre line of the tractor.

In order to compensate for the offset forces created by the offset beam the tractor driver can alter the angle of the drive wheels 32 to the position shown in chain lines at an angle á to the direction of travel. This though results in an increase in fuel consumption and reduced wear on the parts of the plough that engage with the soil.

If the offset forces are small the operator may ignore them and accept a small offset of the front wheels to maintain the correct ploughing line. Alternatively, some adjustment may be made to the angle of the plough shares relative to the plough beam to allow the beam to alter its angle. This is time consuming and the tractor operator is unlikely to achieve an optimum setting whereby the front wheels remain pointing in a straight line, in the intended direction of ploughing, when the plough beam is offset.

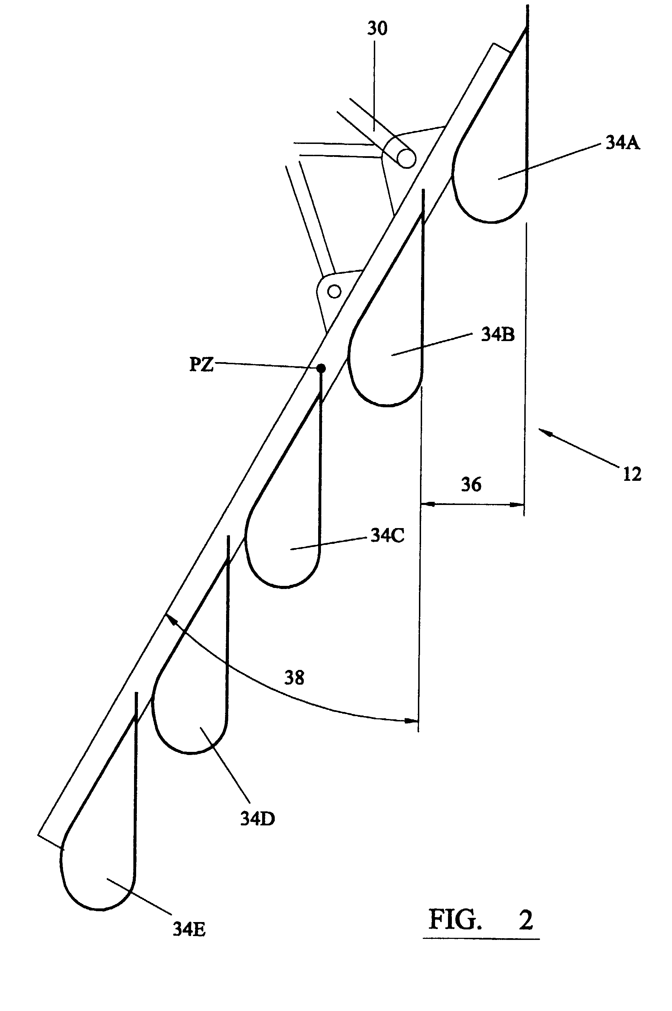

Figure 2 shows more detail of the plough 12 and shows the leading plough body that includes a landside 34a and the subsequent bodies 34b, 34c, 34d and 34e. The furrow width is shown at 36 and the beam angle relative to the direction of travel is shown as 38.

Referring to Figures 1 and 2, the extrapolated intersection between the line of the links 14 and 16 is known as the virtual hitch point Z that all forces acting through subsequent links pass through. The centre between the tractor tyres is shown as M. The point from which all tractive effort originates (T) depends upon the type of tractor and the ballast weight that is used on that tractor. On a two wheel drive tractor where only the rear wheels are driven the points T and M coincide. On a modern four wheel drive tractor as shown though, that is commonly fitted with ballast with 60% of the total weight being on the rear wheels, the point T will lie 40% forward, with respect to the distance between the wheel axles, of the point M. The distance between M and T is shown as X.

There may be side forces acting on the tractor, i.e. from the plough, or from differences of traction across each axle. These forces are pulled at point T and may cause the tractor to turn and pull off centre. Thus it is common for the operator to compensate for such forces by corrective steer.

In principle forces on the plough originate from the soil penetrating points or shares 34 and it can be assumed that on a five furrow plough the mean force PZ comes from the middle plough point 34C.

There are two types of ploughing; ploughing on-the-land and ploughing in-the-furrow. Ploughing on-the-land involves a tractor driving on unploughed soil. Ploughing in the furrow involves the tractor having the right or left tyres on the bottom of the previously ploughed furrow and the tractors other tyres on the unploughed soil so that the tractor is continuously slanted.

When ploughing in-the-furrow the plough front furrow offset must be set to be one furrow width away from the inside distance of the tractor rear tyres. When ploughing on-the-land the plough front furrow offset must be set to be one furrow width less. This is about 200 mm/250 mm outside the tractor tyre. These distances are only approximate as all soils vary and a front furrow width of 500 mm may have to be closed down to perhaps 300 mm if conditions so dictate.

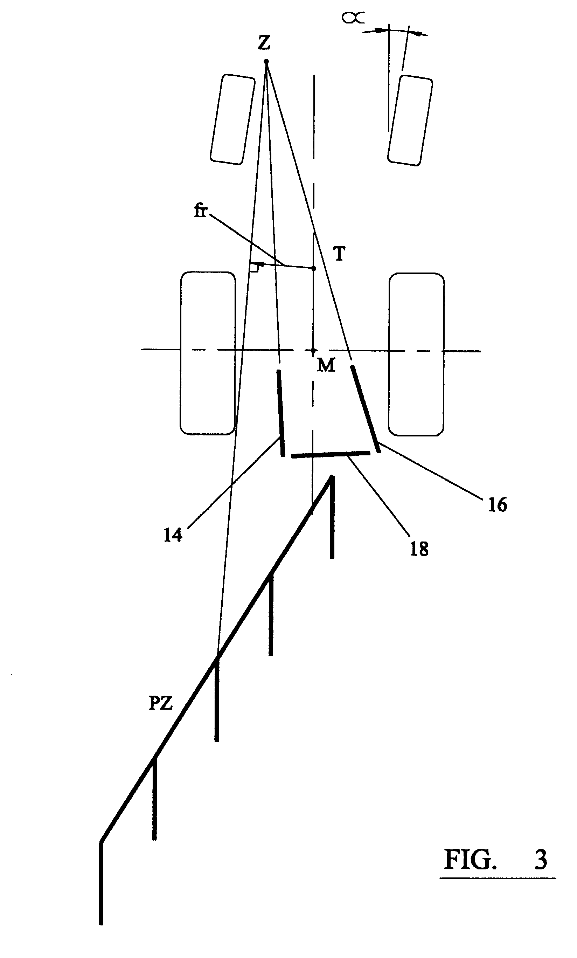

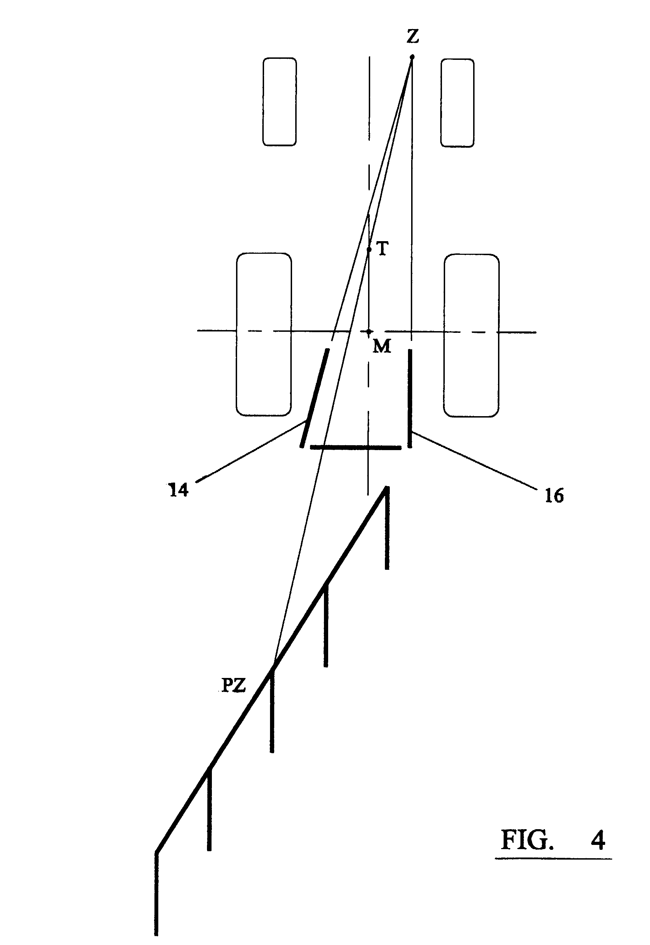

Figure 3 shows an unbalanced arrangement for towing the plough. The forces coming from the links 14 and 16 meet at the point Z which is offset from the centre line of the tractor. The line from the point PZ of the plough to the virtual hitch Z is offset from the tractive effort point T resulting in a left pull on the tractor as indicated by the line fr. Thus the wheels have to be turned to the right in order for the tractor to maintain a straight ploughing line. With the plough being at the same angle and at the same offset it can be seen that the links 14 and 16 would have to be angled such that the forward continuation of each link meet at a point Z which is offset to the right of the centre line of the tractor, as shown in Figure 4. Thus the line coming from the point PZ to the virtual pulling point Z is able to cross through the tractive point T to allow the front wheels to be straight for continued driving of the tractor in a straight line.

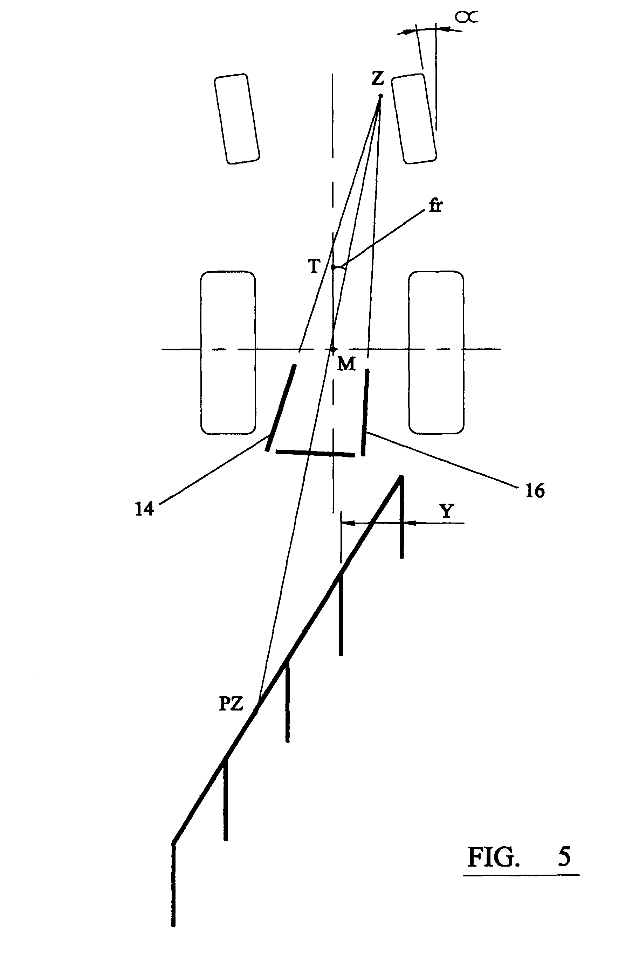

Figure 5 shows a condition where the front furrow is offset and again unmatched forces exist which result in the force fr on the point T. The force fr is less than that previously described and consequently the angle á of the front wheels required to continue driving in a straight line is less than has previously been shown. An operator of the tractor may view the links 14 and 16 that are running at an angle behind the tractor to the position where the continuation of those links in the forward direction meets on the centre line of the tractor and thereby, because he views that offset, he may wrongly believe that the tractor is unbalanced with no offset of the front wheels required.

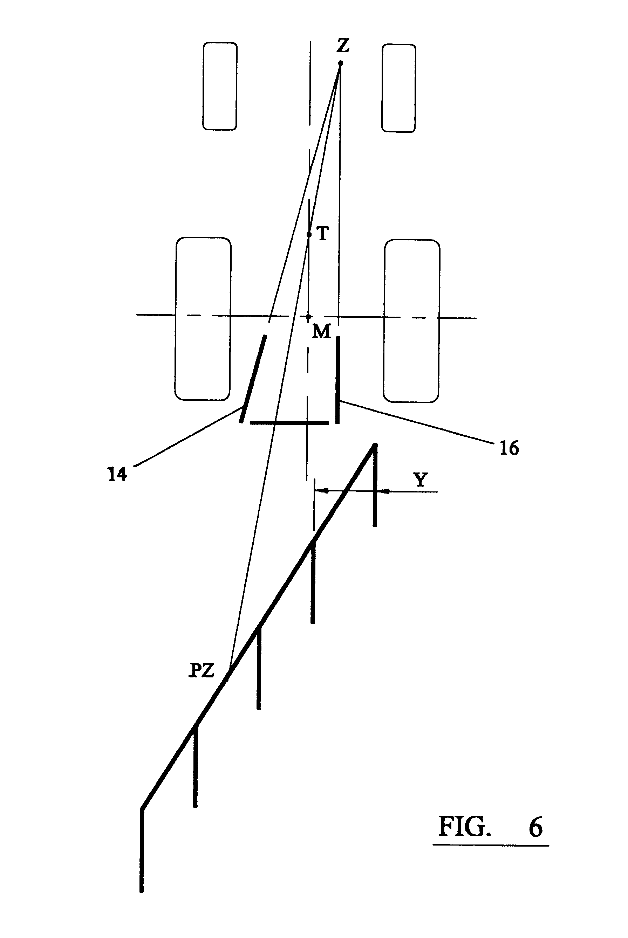

Figure 6 is a view similar to Figure 5 in that the front furrow is offset. In this instance though the forces have been matched such that line PZ to Z runs through the tractive force point T to allow the tractor to be steered in a straight line.

It can be seen that what is actually desired to move when the linkage is changed from one position to another position is not only the angle of the linkage to alter, but also the tractor lower linkages 14 and 16 are required to pivot about their point of connection to the tractor. Accordingly the plough headstock 18 will swing about its pivotal connections to the links 14 and 16 to cause the angle of the headstock relative to the direction of travel to change as well as the transverse position of the headstock relative to the tractor changing. These should preferably result in the forces being balanced to avoid any corrective steer.

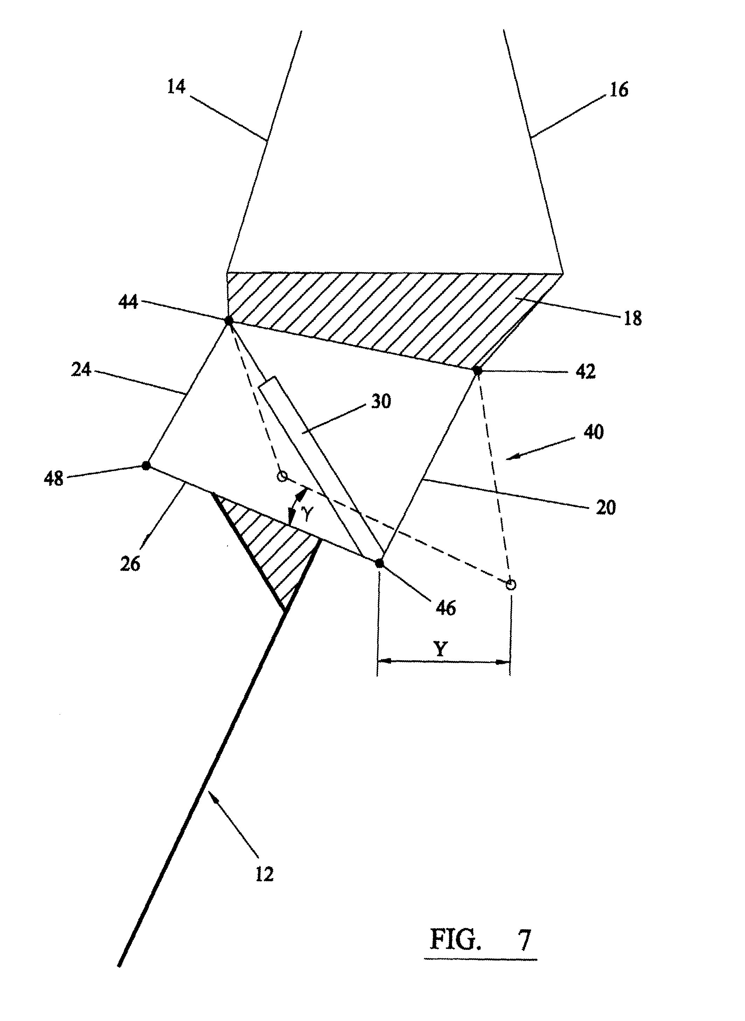

Referring to Figure 7, a non parallel linkage is provided by the pivot points 42 and 44 at either end of the plough headstock, by the links 20 and 24 that are connected to the pivot points 42 and 44 respectively and by the link 26 that connects the trailing ends of the links 20 and 24 at pivot points 46 and 48 respectively.

The length of the side link 20 is greater than the length of the side link 24. The length of the plough headstock 18 is the same as the length of the link 26. Accordingly, when an actuator 30 is moved to increase its effective length between the pivot points 44 and 46, the linkage 40 moves to the position shown in chain lines. The angle of the link 26 will have changed relative to its previous angle to the headstock by an angle ã when the plough beam has been shifted sideways by a distance y. Whilst it might appear that the plough beam has been move sideways by a distance y and that its angle to the direction of ploughing has been altered by ã, what in fact happens is that the angle of the plough beam remains the same, even though it has been shifted sideways, and the other parts move their orientation relative to the tractor in a manner to be described below.

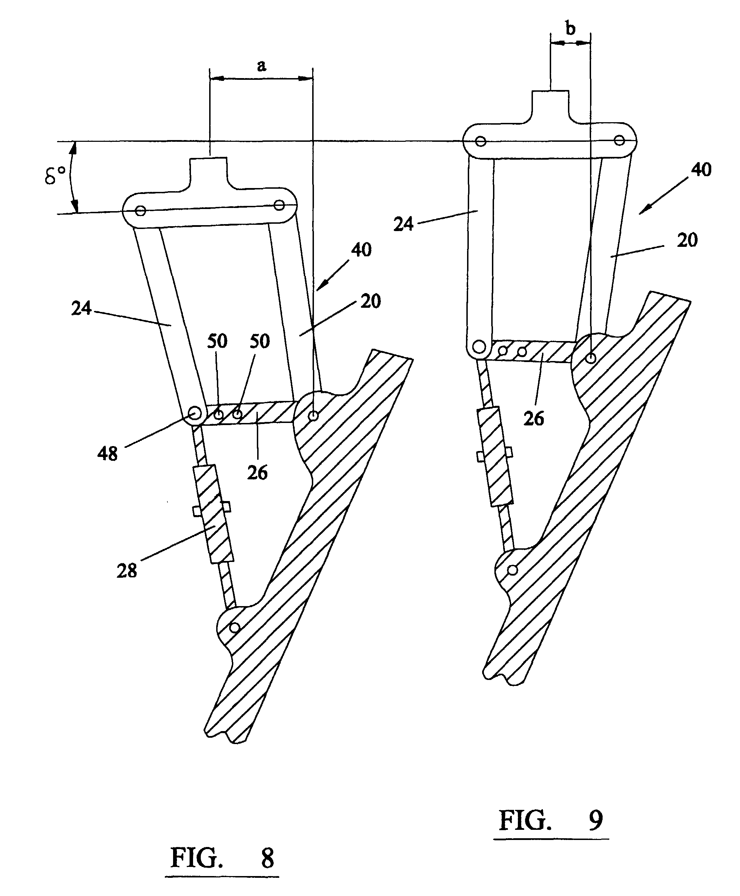

Figures 8 and 9 show one embodiment of the linkage 40 in two relative positions. The side link 20 is shorter than the side link 24 and the headstock 18 is longer than the opposing link 26. The link 26 is provided with openings 50 whereby the pivotal connection 48 of the links 24 and 26 can be adjusted to make the effective length of the link 26 different and shorter from the position shown. An hydraulic cylinder (not shown) can be used to move the linkage 40 between the positions shown in Figures 8 and 9 or any position between those or even a position beyond those shown. A turn buckle 28 can be used to alter the effective angle of the plough beam relative to the angle of the link 26. The adjustment provided by the holes 50 may alter the relative length of the headstock 18 to the link 26 from a position in which the link 26 is 4% shorter than the headstock link 18, in the position shown, or to a position in which the link 26 is shorter than the headstock 18 by 20%

Comparing Figures 8 and 9 it can be seen that the plough beam 12, relative to the headstock, in the direction of travel has been offset by a distance of a, in Figure 8, and b in Figure 9. The difference between a and b will not, in practice, be equivalent to the change in offset of the beam 12 relative to the centre line of the tractor as the plough headstock will move relative to the tractor in a manner to be described below. Also comparing Figures 8 and 9, because the plough headstock moves, and because its movement is controlled by the links 14 and 16 that are connected to the tractor, the headstock will also undergo some change in angle when swinging about the tractor 14 and 16, and that change in angle is indicated as äo in Figure 8.

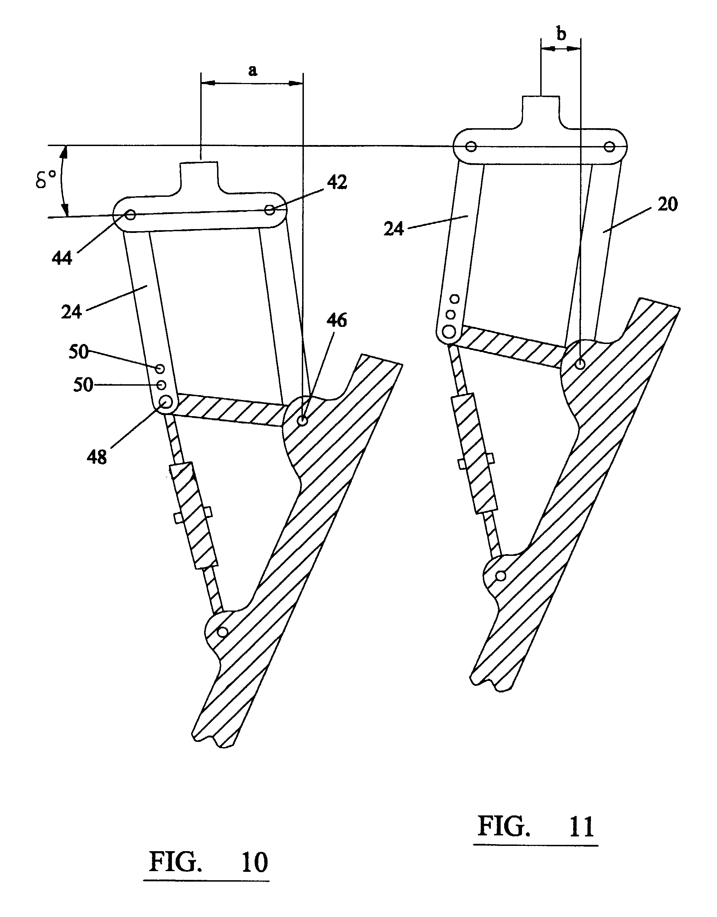

Figures 10 and 11 operate in the same way as the arrangement shown in Figures 8 and 9 with the exception that the alternative hole positions 50 adjust the effective length of the link 24 such that, in the position shown in Figure 10, the link 20 is 4% longer than the link 24 and, when the link 24 has its length altered to its shortest adjustment position, the link 20 is 20% longer than the link 24. The adjustment features provided in Figures 8 and 9 and Figures 10 and 11 may be combined.

In Figures 10 and 11 though the length between the pivots 44 and 42 is the same as the length between the pivots 48 and 46.

Although not shown in Figures 8 to 11, the side links 20 and 24 can be reversed such that the short links can swap positions with the long link to achieve the required offset.

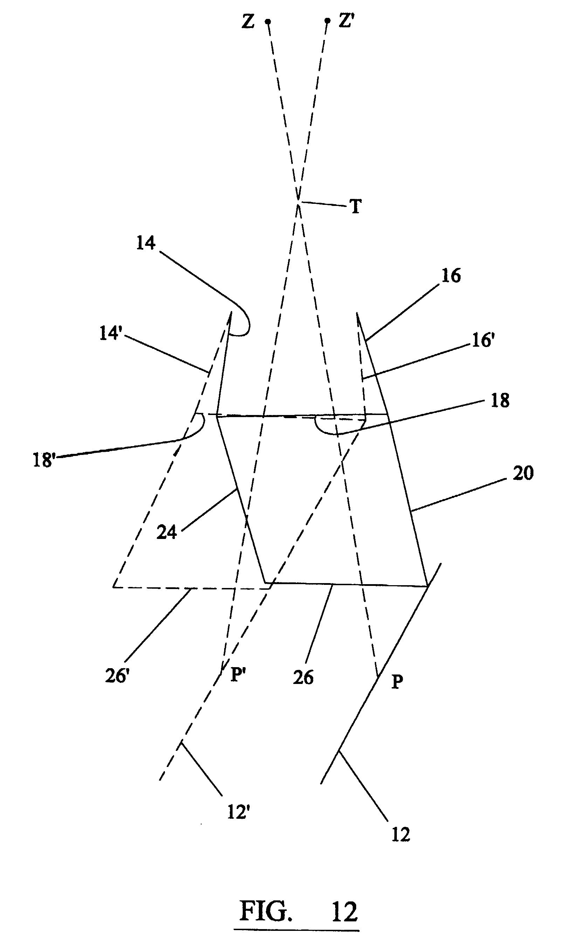

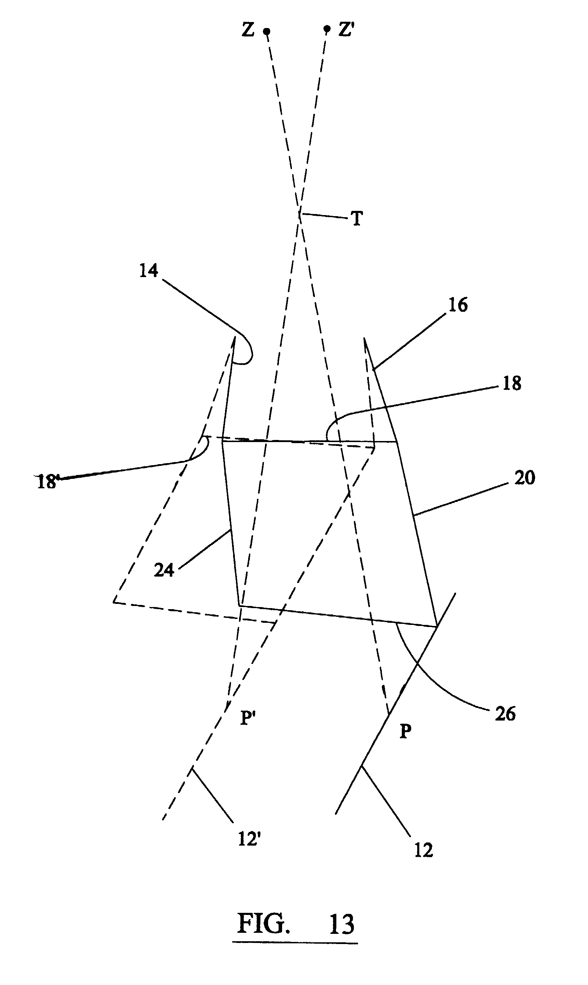

Figures 12 and 13 show respectively, the forces involved in Figures 8 and 9 and 10 and 11. The drawings have been exaggerated somewhat to illustrate how the forces operate.

In Figure 12, the solid lines show the tractor links 14 and 16 extending up to the theoretical point Z with the linkages 18, 20, 24 and 26 being such that the plough 12 has its pulling force coming from the point PZ passing through the tractive force T of the vehicle.

When the plough is moved sideways to the position shown at 12', the links move as shown. If the link 26' is shorter than the link 18' the link 18' undergoes a relatively small change in angle in order to achieve the significant lateral movement of the plough beam. In the new position the projection of the links 14' and 16' passes up to the point Z' and the force of the plough coming from point P' passes through the point T to the point Z'. Thus, for any given movement between those positions shown and indeed beyond either position shown it may be possible to have the tractor in a balanced condition, or a very nearly balanced condition.

In Figure 13 the length of the link 24 is less than the link 20. Again the plough is shown in two different positions. Because the linkage is not parallel the link 18 is able to move to the position 18' to cause the tractor links 14' and 16' to move to the position shown and to arrive at a balanced condition again.

The plough will effectively be dragged behind the points where the links 14 and 16 are attached to the tractor in a free swinging motion. It just so happens that with the non parallel arrangement shown in the figures this free swinging, which is controlled of course by the angle of the plough beam which must remain the same, allows the linkages to take up the positions shown in a balanced condition.

It can be seen that, because the angle of the beam 12 remains constant when moving, and because the linkage is not a parallelogram, when the linkage is moved the angle of the link 18 must change. Thus the tractor links also move. Considering Figure 13, for instance, there has been a considerable sideways shift of the plough beam. The angle of the link 18 is able to be altered by the left hand end of the link 18 moving upwardly (when viewed in the figure) in an arc defined by the length of the tractor link 14 and by the right hand end of the link 18 moving downwardly in an arc controlled by the tractor link 16.

Thus, a considerable change in angle of the link 18 can be achieved for a relatively small amount of sideways movement of the link 18 when compared to the sideways shift of the link 26 and the plough beam 12.

It is possible to alter the turn buckle shown in the earlier drawings to achieve a balanced condition. It is also possible to modify the length of one or more links, or to interchange the links, in order to achieve the balanced condition. However, once set up, all the operator has to do is to adjust a single hydraulic cylinder to alter the angles in the quadrilateral linkage with the plough automatically taking up the balanced condition regardless of the offset.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A towing linkage of at least four sides including a forward link that, in use, is arranged to be connected to a towing vehicle and a rearward link, spaced from the forward link, that is arranged, in use, to be connected to an article to be towed, the linkage including adjustment means whereby the relative angle of the forward link to the rearward link can be altered.

2. A linkage as claimed in Claim 1 in which actuation of the adjustment means is arranged, in use, to cause a sideways shift of an article being towed.

3. A linkage as claimed in Claim 1 or 2 in which actuation of the adjustment means is arranged to cause an angular shift of the forward link.

4. A linkage as claimed in any preceding claim in which actuation of the adjustment means is arranged, in use, to maintain the angle of the rearward link constant with respect to the direction of motion of a towing vehicle.

5. A linkage as claimed in any preceding claim in which the effective length of the forward link is different from the effective length of the rearward link and, alternatively or additionally, the effective length of a link at one side is different from the length of a link at the other side.

6. A linkage as claimed in Claim 5 in which the difference in length of the forward or rearward links or the side links is adjustable between a plurality of different effective lengths.

7. A linkage as claimed in any preceding claim which is arranged to be connected at two spaced locations to two arms that project rearwardly from a vehicle, the arms projecting rearwardly and outwardly from each other with respect to the vehicle, the arms being arranged to be connected at opposed side regions of the forward link, the arms, when projected forward, coinciding at a point forward of the arms with that point being arranged to move in an opposite sideways direction to the centre line of a vehicle to the direction that the rearward link moves in a sideways direction on actuation of the adjustment means.

8. A method of adjusting a towing linkage comprising moving a forward link relative to a rearward link whereby the relative angle of the forward link to the rearward link is altered.

9. A method as claimed in Claim 8 comprising causing the angle of the rearward link to remain constant with respect to the direction of intended towing after altering the relative angle of the forward and rearward links.

10. A method as claimed in Claim 8 or 9 comprising, when the linkage is connected to a vehicle, causing the rear link to move in one sideways direction with respect to the intended direction of travel and causing an effective towing point comprised by causing the coincidence of a projection forward of two spaced arms that tow the linkage to move in the opposite sideways direction with respect to the intended direction of travel.
